# EUROPÄISCHE PATENTANMELDUNG

(11) **EP 1 577 761 A2**
(43) Veröffentlichungstag der Anmeldung: **21.09.2005**
(21) Anmeldenummer: 05101131.0
(22) Anmeldetag: 15.02.2005
(51) Int. Cl.: G06F 9/44

(54) **Verfahren und Vorrichtung zur Erstellung einer Bediensoftware für ein Bediengerät einer Automatisierungskomponente**

(30) Priorität: 02.03.2004 DE 102004010203
(71) Anmelder: SIEMENS AKTIENGESELLSCHAFT, 80333 München (DE)
(72) Erfinder: Denzlein, Michael, 91056, Erlangen (DE)

(57) **Zusammenfassung**

Verfahren und Vorrichtung zur Erstellung einer Bediensoftware für ein Bediengerät einer Automatisierungskomponente.

Um die Bedienungsfreundlichkeit einer Projektierungssoftware (9) zu erhöhen wird vorgeschlagen, eine direkte Information (12,13,14,15) über die Anwendbarkeit der Bediensoftware für das Bediengerät (1) bereitzustellen derart, dass die Information (12,13,14,15) unmittelbar im Rahmen einer Bedienoberfläche einer Projektierungssoftware erfaßbar ist.

## Beschreibung

Die Erfindung betrifft ein Verfahren sowie eine Vorrichtung zur Erstellung einer Projektierung für ein Bediengerät einer Automatisierungskomponente. Insbesondere betrifft die Erfindung das Erstellen einer Mensch-Maschine-Schnittstelle (HMI).

Bediengeräte in Form von HMI-Geräte dienen u.a. zur Visualisierung und Einstellung von für den Betrieb der Automatisierungskomponente relevanten Steuerungsgrößen. HMI-Geräte können beispielsweise HMI-Anzeigepanels sein, die auch kurz als HMI-Panels, Bedienpanels oder auch Operatorpanels bezeichnet werden. Ein HMI-Gerät umfasst in der Regel eine Steuereinheit sowie eine Anzeigeeinheit, beispielsweise ein LCD-Display. Die Steuereinheit umfasst beispielsweise einen Prozessor (CPU) und weitere Komponenten, beispielsweise einen RAM-Speicher, die an einen Datenbus, beispielsweise einen CPU-Adress- und Datenbus angeschlossen sind. Im Speicher der Steuereinheit ist dabei u. a. die HMI-Oberfläche abgelegt, insbesondere die Bedienbilder sowie deren Verknüpfungen.

Jedes Bediengerät zeichnet sich durch eine bestimmte Hardware-Konfiguration aus. So gibt es Bediengeräte mit Touchscreen und solche mit integrierter Tastatur, Bediengeräte mit einem Farb- oder Schwarzweiß-Display usw. Darüber hinaus verfügt jedes Bediengerät über eine bestimmte Speichergröße.

HMI-Oberflächen für Bediengeräte werden in einem sogenannten Configuation System (CS) erstellt. Hierzu wird eine spezielle Projektierungssoftware auf einem Hostrechner, beispielsweise einem Standard-PC, betrieben. Nach der Fertigstellung der Projektierung wird diese auf das Bediengerät übertragen.

Aus dem Stand der Technik ist es bekannt, den Speicherbedarf einer Software darzustellen. So beschreibt beispielsweise das Benutzerhandbuch "SIMATIC HMI, ProTool V6.0, Service Pack 2, Windows-basierte Systeme projektieren" (Bestellnummer 6AV6594-1MA06-1AA0) die Möglichkeit, den nach dem Transfer im Flash-Speicher des Bediengerätes beanspruchten Speicherbedarf eines Projektes als Projektinformation anzuzeigen.

Die WO 02/101596 A2 beschreibt darüber hinaus ein Verfahren zur Unterstützung der Projektierung von Fertigungsanlagen, in dem ein Objekte enthaltenes digitales Modell einer Fertigungsanlage in eine Simulationsumgebung eingebettet wird. Dadurch können alle für die Simulationsumgebung zur Simulation notwendigen Informationen bereitgestellt werden.

Aufgabe der vorliegenden Erfindung ist es, die Bedienungsfreundlichkeit einer solchen Projektierungssoftware zu erhöhen. Diese Aufgabe wird durch ein Verfahren nach Anspruch 1 bzw. durch eine Vorrichtung nach Anspruch 9 sowie durch ein Computerprogramm nach Anspruch 10 gelöst.

Ein Grundgedanke der Erfindung ist es dabei, dem Benutzer der Projektierungssoftware eine Information über die Anwendbarkeit der Projektierung für das ausgewählte Bediengerät zur Verfügung zu stellen. Bereits vor der Übertragung der Projektierung von dem Host auf das Bediengerät erhält der Benutzer somit eine direkte Rückmeldung, ob die von ihm erstellte Projektierung in Verbindung mit dem Bediengerät funktionsfähig ist. Die Information wird dem Benutzer dabei vorzugsweise derart bereitgestellt, dass er diese unmittelbar erfassen kann.

Vorteilhafte Ausführungsformen der Erfindung ergeben sich aus den Unteransprüchen.

Eine grundlegende Idee der Erfindung ist es, dem Benutzer der Projektierungssoftware eine Information über den Speicherverbrauch der Projektierung und damit eine Information über die Anwendbarkeit zur Verfügung zu stellen.

Gemäß einer bevorzugten Ausführungsform der Erfindung umfasst die bereitgestellte Information die aktuelle Codegröße der Projektierung. In einer weiteren Ausführungsform wird auf der Grundlage der ermittelten Codegröße eine Aussage über die Übertragbarkeit der Projektierung auf das Bediengerät getroffen und dem Benutzer angegeben.

Gemäß einer weiteren bevorzugten Ausführungsform der Erfindung umfasst die bereitgestellte Information die Größe des zur Ausführung der Projektion erforderlichen Laufzeitspeichers. Besonders vorteilhaft ist in diesem Zusammenhang die Angabe eines für die Projektierung typischerweise erforderlichen Laufzeitspeichers und/oder die Angabe eines Mindestlaufzeitspeichers und/oder die Angabe eines maximalen Laufzeitspeichers. In einer weiteren Ausführungsform wird auf der Grundlage des ermittelten Laufzeitspeicherbedarfs eine Aussage über die Ausführbarkeit der Projektierung auf dem Bediengerät getroffen und dem Benutzer angegeben.

Eine Kernidee der Erfindung ist es, die Information über die Anwendbarkeit bediengerätespezifisch bereitzustellen. Dies bedeutet, dass die Angaben über den Speicherverbrauch u.s.w. stets mit Bezug auf ein konkretes Bediengerät ermittelt und angegeben werden. Hierzu ist der Projektierungssoftware die Größe des im Bediengerät vorhandenen nutzbaren Speichers bekannt. Somit können nicht nur absolute Angaben zur Code- bzw. Laufzeitspeichergröße gemacht werden. Auch Relativangaben, beispielsweise prozentuale Angaben zum Füllstand des zur Verfügung stehenden Speichers, sind möglich.

Die Bereitstellung der Information erfolgt gemäß einer weiteren Ausführungsform der Erfindung in visueller Form. Besonders vorteilhaft ist es in diesem Zusammenhang, wenn die Information direkt im Rahmen der Bedienoberfläche der Projektierungssoftware angezeigt wird. Zusätzlich oder alternativ hierzu ist es selbstverständlich auch möglich, die Information auf einem anderen Weg, beispielsweise über Audiosignale, auszugeben.

Als für eine schnelle Erfassung der Information besonders geeignet haben sich graphische Darstellungen, insbesondere in Form von Balkendarstellungen, erwiesen. Mit Hilfe von farblichen Kennzeichnungen kann die Information dabei besonders gut vermittelt werden.

Neben qualitativen Aussagen, beispielsweise in Form von Farbbalken, werden in einer weiteren Ausführungsform der Erfindung quantitative Informationen in Form von Textdarstellungen bereitgestellt.

Zur Durchführung des erfindungsgemäßen Verfahrens ist eine entsprechende Vorrichtung vorgesehen. Hierbei handelt es sich insbesondere um einen Personalcomputer oder einen anderen Rechner, mit einem Bereitstellungsmodul, das die gewünschte Funktionalität zur Verfügung stellt.

Das Bereitstellungsmodul kann dabei als Programmmodul eines geeigneten Computerprogramms ausgeführt sein, welches auf einem Rechner abläuft. Mit anderen Worten umfasst das Computerprogramm Rechenbefehle, die das Ausführen des erfindungsgemäßen Verfahrens bewirken, wenn das Computerprogramm auf dem Rechner ausgeführt wird.

Die vorliegende Erfindung wird nachfolgend anhand eines Ausführungsbeispieles beschrieben, das mit Hilfe von Zeichnungen näher erläutert wird. Hierbei zeigen:
- FIG 1: eine schematische Darstellung eines CS-Systems mit einem HMI-Gerät,
- FIG 2: einen Bildschirmausdruck einer Projektierungssoftware.

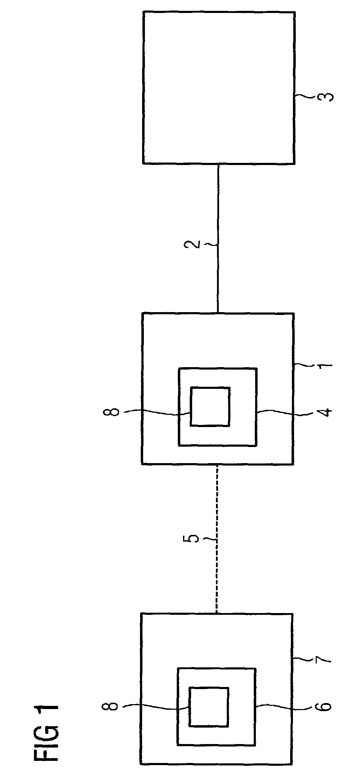

FIG 1 zeigt einen typischen Aufbau mit einem HMI-Gerät 1, das über eine drahtgebundene oder drahtlose Verbindungsleitung 2 mit einer Automatisierungskomponente 3, beispielsweise einer Maschine in einer Fertigungsstrecke, verbunden ist. Das HMI-Gerät 1 umfasst einen RAM-Speicher 4 und ist über eine weitere drahtgebundene oder drahtlose Verbindungsleitung 5 mit einem als Host zur Ausführung einer Projektierungssoftware 6 dienenden Personalcomputer 7 verbindbar. Zur Erstellung einer Projektierung 8 wird die Projektierungssoftware 6 auf dem Personalcomputer 7 ausgeführt. Im Anschluss an die Erstellung wird die Projektierung 8 über die Verbindungsleitung 5 von dem Personalcomputer 7 in den Speicher 4 des HMI-Gerätes 1 übertragen.

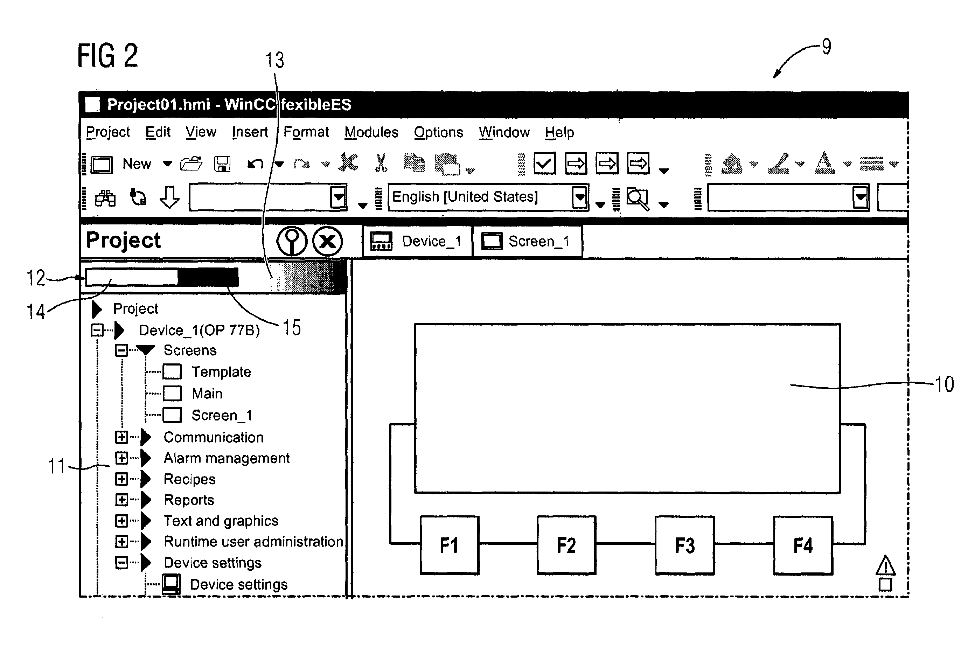

FIG 2 zeigt einen beispielhaften Bildschirmausdruck 9 einer Projektierungssoftware 6. Auf der rechten Seite des Bildschirms ist ein zu erstellendes Bedienbild 10 einer HMI-Oberfläche abgebildet. Auf der linken Seite des Bildschirms ist oberhalb des Projektbaumes 11 ein Balken 12 in einem Anzeigefeld 13 angeordnet. Dem Benutzer der Projektierungssoftware 6 ist es dadurch möglich, unmittelbar während der Projektierung Angaben über den Speicherverbrauch und damit eine Information zur Anwendbarkeit der Projektierung 8 für das HMI-Gerät 1 zu erhalten.

Um eine bediengerätespezifische Anzeige zu erhalten, ist der Gesamtlänge des Anzeigefeldes 13 die Gesamtgröße des nutzbaren im HMI-Gerät 1 zur Verfügung stehenden Speichers 4 zugeordnet. Die Gesamtlänge des angezeigten Balkens 12 entspricht der für die Übertragung und Ausführung der Projektierung 8 in dem HMI-Gerät 1 erforderlichen Größe des Speichers 4 entsprechend dem aktuellen Stand der Projektierung. Der Balkens 12 ist farblich unterteilt in einen ersten Teil 14 zur Angabe der aktuellen Codegröße und einen sich unmittelbar an den ersten Teil 14 anschließenden zweiten Teil 15 zur Angabe des erforderlichen Laufzeitspeichers. Das Anzeigefeld 13 weist als Hintergrund einen von links nach rechts verlaufenden Farbverlauf von grün nach rot auf. Endet der Balken 12 im roten Bereich des Hintergrundfeldes, ist der Speicher 4 des HMI-Gerätes 1 mehr oder weniger ausgeschöpft. Innerhalb des Balkens 13 oder in Form einer Achse mit einer entsprechenden Beschriftung können darüber hinaus auch quantitative Aussagen über die erforderliche Speichergröße etc. getroffen werden (nicht abgebildet).

Ändert der Benutzer Teile der HMI-Oberfläche, fügt er beispielsweise ein weiteres Bedienbild 10 hinzu, so erfolgt zugleich eine Anpassung des Balkens 12 an die geänderte Projektierung 8. Die Größe der Projektierung 8 und damit die Länge des Balkens 12 wird dabei im Hintergrund durch einen Compiler ermittelt, welcher jederzeit die aktuelle Codegröße der Projektierung 8 berechnet. Darüber hinaus sind Mittel zur Abschätzung des erforderlichen Laufzeitspeichers vorgesehen.

Stellt der Benutzer während der Projektierung fest, dass die Größe des Speichers 4 des ursprünglich vorgesehenen HMI-Gerätes 1 für die Projektierung 8 nicht ausreicht, so kann er entweder die aktuelle Projektierung 8 abändern oder aber ein anderes HMI-Gerät 1 mit einem größeren Speicher 4 auswählen. Wählt der Benutzer ein neues HMI-Gerät 1 aus, wird ihm erneut die Balkenanzeige mit einer aktualisierten und auf das neue HMI-Gerät 1 abgestimmten Information zur Verfügung gestellt.

## Patentansprüche

1. Verfahren zur Erstellung einer Projektierung (8) für ein Bediengerät (1) einer Automatisierungskomponente (3), **gekennzeichnet durch** das Bereitstellen einer direkten Information (12, 13, 14, 15) über die Anwendbarkeit der Projektierung (8) für das Bediengerät (1) derart, dass die Information (12, 13, 14, 15) unmittelbar im Rahmen einer Bedienoberfläche einer Projektierungssoftware erfaßbar ist.

2. Verfahren nach Anspruch 1, **gekennzeichnet durch** das Bereitstellen einer Information (14) über die Codegröße der Projektierung (8).

3. Verfahren nach Anspruch 2, **gekennzeichnet durch** das Bereitstellen einer Information über die Übertragbarkeit der Projektierung (8) auf das Bediengerät (1).

4. Verfahren nach einem der Ansprüche 1 bis 3, **gekennzeichnet durch** das Bereitstellen einer Information (15) über die Größe des zur Ausführung der Projektierung (8) erforderlichen Laufzeitspeichers.

5. Verfahren nach Anspruch 4, **gekennzeichnet durch** das Bereitstellen einer Information über die Ausführbarkeit der Projektierung (8) auf dem Bediengerät (1).

6. Verfahren nach einem der Ansprüche 1 bis 5, **gekennzeichnet durch** eine visuelle Darstellung der Information (12, 13, 14, 15).

7. Verfahren nach Anspruch 6, **gekennzeichnet durch** eine graphische und/oder Text-Darstellung der Information (12, 13, 14, 15).

8. Vorrichtung (7) zur Erstellung einer Projektierung (8) für ein Bediengerät (1) einer Automatisierungskomponente (3), **gekennzeichnet durch** ein Bereitstellungsmodul (6) zum Bereitstellen einer direkten Information (12, 13, 14, 15) über die Anwendbarkeit der Projektierung (8) für das Bediengerät (1) derart, dass die Information (12, 13, 14, 15) unmittelbar im Rahmen einer Bedienoberfläche einer Projektierungssoftware erfaßbar ist.

9. Computerprogramm (6) mit Rechenbefehlen zur Ausführung des Verfahrens nach einem der Ansprüche 1 bis 7, wenn das Programm auf einem Rechner (7) ausgeführt wird.
